# EUROPEAN PATENT APPLICATION

(11) **EP 3 382 623 A1**
(43) Date of publication of application: **03.10.2018**
(21) Application number: 17186529.8
(22) Date of filing: 16.08.2017
(51) Int. Cl.: G06Q 10/10

(54) **A PERSONALIZED DISPLAY SYSTEM AND METHOD FOR DYNAMICALLY DISPLAYING USER INFORMATION**

(30) Priority: 27.03.2017 IN 201741010849
(71) Applicant: Wipro Limited, 560 035 Karnataka (IN)
(72) Inventor: KUMAR, Vijay, 560100 Karnataka (IN); NINAN, Thomas Chittakattu, 670706 Kerala (IN); RAI, Shagun, 211001 Uttar Pradesh (IN)
(74) Representative: Finnegan Europe LLP

(57) **Abstract**

The present disclosure relates to field of image processing. Accordingly, disclosed herein is a personalized display system for dynamically displaying user information. An electronic display unit associated with the personalized display system captures visual images of the user and the belongings of the user. The personalized display system receives the captured visual images, extracts user characteristics, and determines the identity of the user. Later, the information related to the identified user are displayed on the electronic display unit. Further, the electronic display unit may continuously monitor an availability status of the user to efficiently manage allocation or deallocation of a workplace and other resources to the users. In an embodiment, the personalized display system also performs customization of environment based on environmental preferences of the user, thereby enhancing overall efficiency and comfort level of the user.

## Description

### Technical Field

The present subject matter is related, in general to image processing, and more particularly, but not exclusively to a personalized display system and method for dynamically displaying user information.

### Background

Presently, each sector of the economy is becoming smart and is relying on technology, directly or indirectly, to accomplish its tasks and targets. Even work places or workstations that are assigned to staff within an organization are not an exception to such transformation. Further, with workstations becoming smart and futuristic, and staff becoming mobile, concept of fixed seating is being replaced by flexible seating. An advantage of the flexible seating is that, it allows a person to choose and occupy a workstation anywhere within the organization for a day or for a required duration of time in the day. However, the flexible seating concept leads to an issue of identification of the person who is occupying the workstation for the day.

### Summary

Disclosed herein is a personalized display system for dynamically displaying user information. The personalized display system comprises an electronic display unit. The electronic display unit comprises a display interface and is associated with one or more image capturing devices to capture one or more visual images of the user and one or more objects associated with the user. Further, the personalized display system comprises a processor. The processor is associated with the electronic display unit. Furthermore, the personalized display system comprises a memory which is communicatively coupled to the processor. The memory stores processor-executable instructions, which, on execution, causes the processor to receive the one or more visual images from the one or more image capturing devices. Upon receiving the one or more visual images, the processor extracts at least one of one or more user characteristics and object properties from each of the one or more visual images. Further, the processor determines identity of the user by comparing the one or more user characteristics with one or more pre-stored user characteristics. Finally, the processor displays information related to the user on the display interface.

The processor may continue to display the information related to the identified user based on availability status of the user. The processor may determine the availability status by performing at least one of: checking if the user is in a field of view of one or more image capturing devices; comparing object properties with pre-stored object properties; and verifying attendance status of the user from a real-time attendance monitoring system. The one or more visual images may be captured at periodic intervals. The one or more user characteristics may comprise facial characteristics of the user. The information displayed on the display interface may comprise at least one of name of the user, designation of the user, contact details of the user and availability status of the user. The processor may modify one or more environmental properties based on environmental preferences of the user.

Further, the present disclosure discloses a method of dynamically displaying user information. The method comprises receiving, by a personalized display system, one or more visual images of the user and one or more objects associated with the user. The one or more visual images are captured by one or more image capturing devices associated with an electronic display unit. The electronic display unit is associated with the personalized display system. Upon receiving the one or more visual images, the method comprises extracting at least one of one or more user characteristics and object properties from each of the one or more visual images. Further, the method comprises determining identity of the user by comparing the one or more user characteristics with one or more pre-stored user characteristics. Finally, the method comprises displaying information related to the user on a display interface configured in the electronic display unit.

The foregoing summary is illustrative only and is not intended to be in any way limiting. In addition to the illustrative aspects, embodiments, and features described above, further aspects, embodiments, and features will become apparent by reference to the drawings and the following detailed description.

### Brief Description of Drawings

The accompanying drawings, which are incorporated in and constitute a part of this disclosure, illustrate exemplary embodiments and, together with the description, explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
**FIG. 1** shows an exemplary environment in accordance with some embodiments of the present disclosure;
**FIG. 2** shows a detailed block diagram illustrating a personalized display system for dynamically displaying user information in accordance with some embodiments of the present disclosure;
**FIG. 3A** and **FIG. 3B** illustrate working of an electronic display unit associated with the personalized display system in accordance with some embodiments of the present disclosure;
**FIG. 4** shows a flowchart illustrating a method of dynamically displaying user information in accordance with some embodiments of the present disclosure; and
**FIG. 5** illustrates a block diagram of an exemplary computer system for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### Detailed Description

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the scope of the disclosure.

The terms "comprises", "comprising" or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

The present disclosure discloses a personalized display system for dynamically displaying user information. The user information may be displayed on an electronic display unit. In an implementation, the electronic display unit may be configured with one or more image capturing devices such as, a depth camera, along with a display interface for efficiently capturing one or more visual images of the user and to display information related to the identified user on the display interface. For example, when the user occupies a workplace near the electronic display unit, the one or more image capturing devices would capture the visual images of the user and one or more belongings of the user. Later, one or more user characteristics may be extracted from the one or more visual images to identify the user by comparing the extracted user characteristics against pre-stored user characteristics. Upon identifying the user, the personalized display system may dynamically populate the information related to the user on the display interface of the electronic display unit.

In an embodiment, the personalized display system may continue to display the information related to the user on the display interface as long as the user is available. The availability of the user may be determined by checking if the user is in field of view of the one or more image capturing devices. Further, the availability of the user may be determined by comparing properties of the one or more objects associated with the user against one or more pre-stored object properties. Alternatively, the availability of the user may be confirmed by verifying attendance status of the user from a real-time attendance monitoring system.

Additionally, the personalized display system may be used for customizing various environmental parameters such as, heat, ventilation, and air conditioning (HVAC) parameters, specific to the identified user based on preferences of the user.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

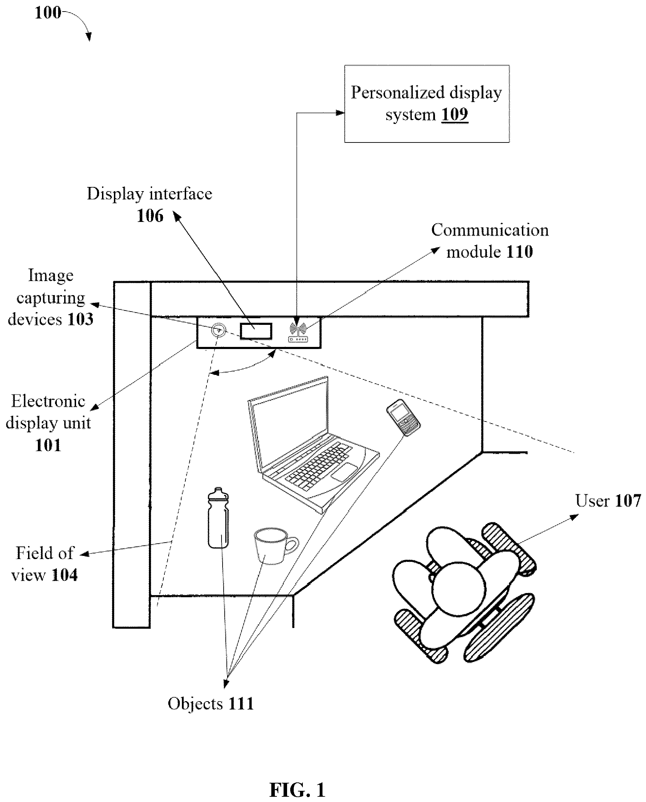

**FIG. 1** shows an exemplary environment in accordance with some embodiments of the present disclosure.

Accordingly, environment **100** includes an electronic display unit **101** and a user **107.** The electronic display unit **101** may include one or more image capturing devices **103,** a display interface **106** and a communication module **110.** The one or more image capturing devices **103** may capture one or more visual images of the user **107** and/or one or more objects **111** or belongings associated with the user **107.** In an embodiment, the one or more image capturing devices **103** may be configured within the electronic display unit **101** and may include, without limiting to, a black and white image sensor, a color image sensor, a Red Green Blue (RGB) depth camera, and the like. Alternatively, the one or more image capturing devices **103** may be configured external to the electronic display unit **101.** In another embodiment, the one or more image capturing devices **103** may include a video capturing unit, which would continuously monitor the user **107.** In an embodiment, the communication module **110** may be used to transmit the one or more visual images to the personalized display system **109.**

In an implementation, the electronic display unit **101** may be communicatively associated with a personalized display system **109.** The electronic display unit **101** may transmit each of the one or more visual images to the personalized display system **109** through the communication module **110.** Upon receiving the one or more visual images, the personalized display system **109** may extract one or more user characteristics and/or object properties from each of the one or more visual images for determining an identity of the user **107.**

As an example, the one or more user characteristics that are extracted from the one or more visual images may include facial characteristics of the user **107,** which in turn may be compared against pre-stored facial characteristics of the user **107** to identify the identity of the user **107.** Further, the personalized display system **109** may analyze each of the one or more visual images to detect the one or more objects **111** associated with the user **107,** such as cellphone of the user **107,** a water flask or a coffee mug used by the user **107** and the like. Based on the analysis, the personalized display system **109** extracts one or more object properties, which are properties specific to the one or more objects **111** of the user **107,** to confirm presence and/or availability of the user **107** within the field of view **104** of the one or more image capturing devices **103.**

In an embodiment, once the identity of the user **107** is determined by the personalized display system **109,** the personalized display system **109** may communicate with one or more data sources such as, a Lightweight Directory Access Protocol (LDAP) and an Enterprise Resource Planning (ERP) databases in the organization to which the user **107** belongs, to retrieve various information related to the user **107.** Further, the personalized display system **109** transmits the information related to the user **107** to the electronic display unit **101** (also referred to as nameplate). The electronic display unit **101** displays the user information received from the personalized display system **109** through the display interface **106** configured in the electronic display unit **101.**

In an embodiment, the electronic display unit **101** continues to display the information related to user **107** on the display interface **106** till the user **107** is available in region of the electronic display unit **101.** In an implementation, the personalized display system **109** may determine an availability status **215** of the user **107** to control the displaying of the user information on the display interface **106.** The availability status **215** may be a constraint such as 'available' or 'unavailable', which indicates the presence and/or absence of the user **107** in the field of view **104** of the one or more image capturing devices **103.** In an embodiment, the availability status **215** may be determined by comparing the one or more object properties with pre-stored properties of the objects **111.** On the other hand, the personalized display system **109** may be linked to a real-time attendance monitoring system in the organization to access details related to attendance, appointments, and calendar events scheduled for the user **107,** thereby determining when the availability of the user **107.**

In some embodiments, the intended use of the personalized display system **109** is not limited to a workplace of an organization. Instead, the personalized display system may be configured to monitor, identify and display information related to users across various locations such as, hospitals, schools, public booths, and the like.

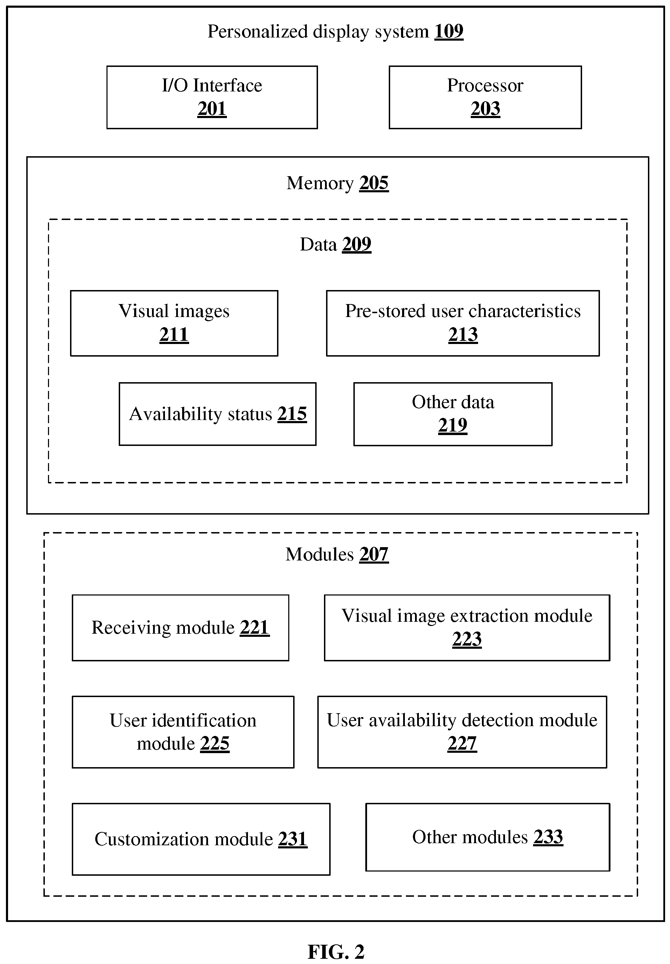

**FIG. 2** shows a detailed block diagram illustrating a personalized display system **109** for dynamically displaying user information in accordance with some embodiments of the present disclosure.

The personalized display system **109** may include an I/O interface **201,** a processor **203** and a memory **205.** The I/O interface **201** may be responsible for communicating with the electronic display unit **101** to receive one or more visual images **211** of the user **107** and/or the objects **111,** and to transmit the information related to the user **107** to the display interface **106.** The memory **205** may be communicatively coupled to the processor **203.** The processor **203** may be configured to perform one or more functions of the personalized display system **109** for dynamically displaying the user information. In one implementation, the personalized display system **109** may include data **209** and modules **207,** which are used for performing various operations in accordance with the embodiments of the present disclosure. In an embodiment, the data **209** may be stored within the memory **205** and may include, without limiting to, the one or more visual images **211,** pre-stored user characteristics **213,** availability status **215,** and other data **219.**

In some embodiments, the data **209** may be stored within the memory **205** in the form of various data structures. Additionally, the data **209** may be organized using data models, such as relational or hierarchical data models. The other data **219** may store data, including temporary data and temporary files, generated by the modules **207** while dynamically displaying the user information on the electronic display unit **101.**

In an embodiment, the one or more visual images **211** are captured by the one or more image capturing devices **103** configured within the electronic display unit **101.** Suppose the user **107** has occupied a workplace. Here, the one or more visual images **211** captured by the one or more image capturing devices **103** would include a specific region of the workplace which falls within the field of view **104** of the one or more image capturing devices **103.** In an embodiment, the one or more visual images **211** are captured recurrently and/or periodically and each of the one or more visual images **211** are processed by the personalized display system **109** to extract the one or more user characteristics and/or the object properties from each of the one or more visual images **211.**

In an embodiment, the pre-stored user characteristics **213** may include user specific characteristics and behavioral attributes that are used by the personalized display system **109** to determine the identity of the user **107.** As an example, the pre-stored user characteristics **213** of the user **107** may include, without limiting to, facial characteristics of the user **107,** hand gestures/movements of the user **107,** and the like. The pre-stored user characteristics **213** may be extracted from the one or more historical visual images **211** of the user **107** and are updated whenever a new user characteristic is identified.

In an embodiment, the availability status **215** of the user **107** may be determined based on presence of the user **107** and/or objects **111** in the field of view **104** of the one or more image capturing devices **103** or based on attendance status of the user **107.** The presence of objects **111** may be determined by extracting one or more object properties from the one or more visual images **211** and then comparing the extracted object properties with pre-stored object properties related to the objects **111** of the user **107.** As an example, the object properties may include, without limiting to, dimension of the object, color of the object, user-specific inscriptions on the objects **111** and the like. Further, the attendance status of the user **107** may be retrieved from a real-time attendance monitoring system. In an embodiment, the availability status **215** of the user **107** may be one of 'available' or 'unavailable'.

In some embodiment, the data **209** may be processed by one or more modules **207** in the personalized display system **109.** In one implementation, the one or more modules **207** may be stored as a part of the processor **203.** In another implementation, the one or more modules **207** may be communicatively coupled to the processor **203** for performing one or more functions of the personalized display system **109.** The modules **207** may include, without limiting to, a receiving module **221,** a visual image extraction module **223,** a user identification module **225,** a user availability detection module **227,** a customization module **231** and other modules **233.**

As used herein, the term 'module' may refer to an application specific integrated circuit (ASIC), an electronic circuit, a processor (shared, dedicated, or group) and memory that execute one or more software or firmware programs, a combinational logic circuit, and/or other suitable components that provide the described functionality. In an embodiment, the other modules **233** may be used to perform various miscellaneous functionalities of the personalized display system **109.** It will be appreciated that such modules **207** may be represented as a single module or a combination of different modules.

In an embodiment, the receiving module **221** may be responsible for receiving the one or more visual images **211** of the user **107** and/or the one or more objects **111** associated with the user **107** from the electronic display unit **101.**

In an embodiment, the visual image extraction module **223** may be responsible for extracting the one or more user characteristics and/or the one or more object properties from each of the one or more visual images **211** of the user **107** and the one or more objects **111** associated with the user **107.** In an implementation, the visual image extraction module **223** may use any of the existing image processing and object detection techniques to identify regions which must be extracted from the one or more visual images **211.** Additionally, the visual image extraction module **223** may be configured with a face recognition technique to clearly detect and extract the face of the user **107.**

In an embodiment, the user identification module **225** may be responsible for detecting the identity of the user **107.** The user identification module **225** may compare the one or more user characteristics extracted from the one or more visual images **211** with the one or more pre-stored user characteristics **213.** As an example, the identity of the user **107** may be detecting by comparing the facial characteristics extracted from the one or more visual images **211** with pre-stored facial characteristics of one or more users. In an embodiment, once the user identification module **225** detects the identity of the user **107,** the personalized display system **109** may retrieve the information related to the identified user **107** and may transmit the retrieved information to the electronic display unit **101** for displaying the information related to the user **107** on the display interface **106.**

In an embodiment, the user availability detection module **227** may be responsible for determining the availability status **215** of the user **107** and to control the displaying of the user information on the display interface **106.** As an example, the user availability detection module **227** may determine the availability status **215** by checking if the user **107** is present in the field of view **104** of the one or more image capturing devices **103.** Alternatively, the availability status **215** may be determined by performing at least one of a comparison of the object properties with pre-stored object properties and verification of the attendance status of the user **107** from the real-time attendance monitoring system. In an embodiment, if the availability status **215** of the user **107** is determined to be 'unavailable', then the user availability detection module **227** may instruct the electronic display unit **101** to stop displaying the user information on the display interface **106.**

In an embodiment, the customization module **231** may be responsible for customizing or modifying the environmental parameters such as temperature, air conditioning, ventilation, lighting, and the like, in surroundings of the user **107** as per the environmental preference of the user **107.** The customization module **231** may be communicatively configured with the user identification module **225** and the user availability detection module **227** to identify the identity of the user **107** and to confirm whether the user **107** is available. As an example, if the range of temperature of the surroundings preferred by a user 'A' is between 21° Celsius and 24 Celsius, then the customization module **231** may automatically set (through an air-conditioner in the workplace of the user 'A') the temperature of the user surroundings to a value within the temperature range preferred by the user 'A', as soon as the user 'A' is identified is determined to be available. In an embodiment, once the availability status **215** of the user 'A' changes as 'unavailable', the customization module **231** may reset values of all the environmental parameters to predetermined default values.

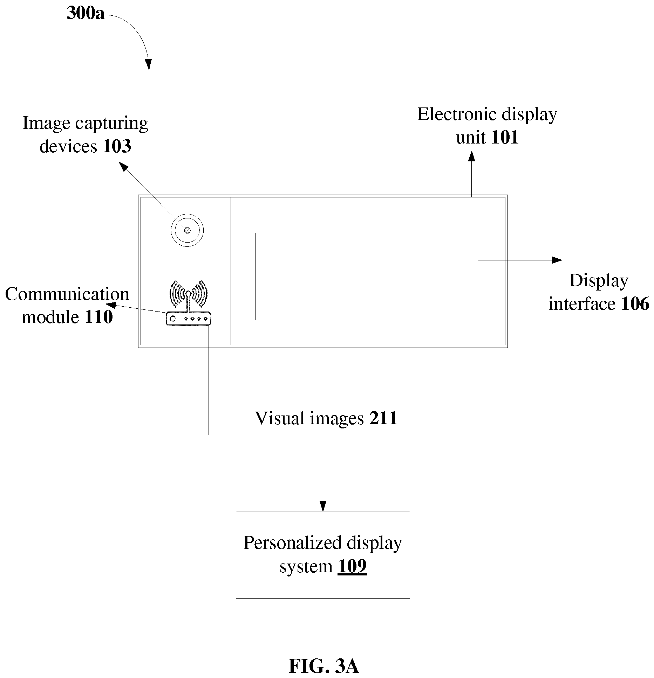

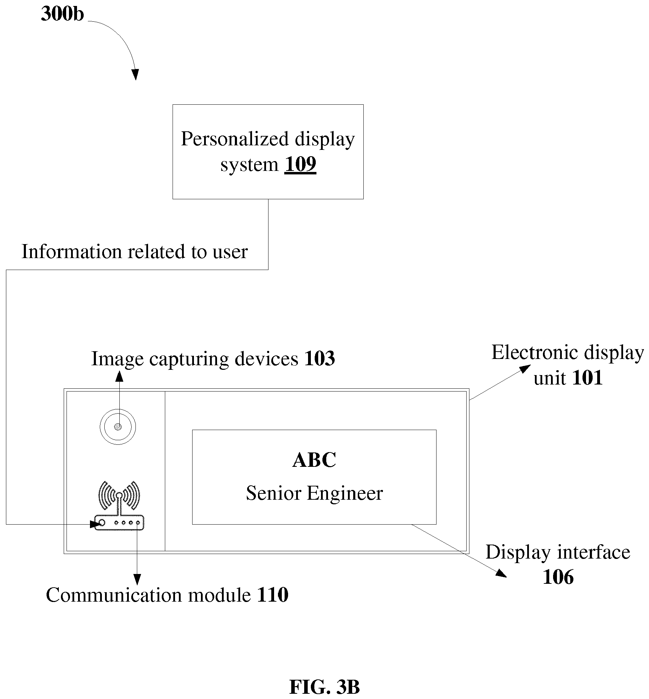

**FIG. 3A** and **FIG. 3B** illustrate working of an electronic display unit **101** associated with the personalized display system **109** in accordance with some embodiments of the present disclosure;

The environment **300a** illustrates the electronic display unit **101** having the display interface **106,** the one or more image capturing devices **103** and a communication module **110.** In an embodiment, the electronic display unit **101** may be configured in a workplace of the user **107,** such that, seating position and the work desk of the user **107** are within the field of view **104** of the one or more image capturing devices **103.** The one or more image capturing devices **103** may capture one or more visual images **211** of the user **107** and the one or more objects **111**/belongings associated with the user **107.** At an initial point, the electronic display unit **101** may not display any information related to the user **107,** since the identity of the user **107** is unknown. Hence, the display interface **106** may be left blank or turned off at the initial stage.

Therefore, to detect the identity of the user **107** and to display information related to the user **107,** the electronic display unit **101** may transmit the one or more visual images **211** to the personalized display system **109** through the communication module **110.** As an example, the communication module **110** may include, without limiting to, a wireless communication medium/interface such as Wi-Fi, Bluetooth and the like or a wired communication medium/interface such as Ethernet or any appropriate combinations thereof.

The personalized display system **109** processes each of the one or more visual images **211** to extract the user characteristics from each of the one or more visual images **211** using the visual image extraction module **223.** Subsequently, the personalized display system **109,** using the user identification module **225,** may detect the identity of the user **107** by comparing the extracted user characteristics with the pre-stored user characteristics **213.** Once the identity of the user **107** is detected, the personalized display system **109** may communicate with the one or more data sources, such as the ERP or the LDAP databases, in the organization of the user **107** to collect various information related to the user **107.** Finally, the collected user information is transmitted to the electronic display unit **101** for displaying on the display interface **106.**

Further, as illustrated in environment **300b** in **FIG. 3B****,** the electronic display unit **101** may receive the information related to the user **107** from the personalized display system **109** through the communication module **110.** As an example, the information related to the user **107** may include name/identity of the user **107,** such as user 'ABC', along with the role/designation of the user **107** such as, 'Senior Engineer'. Then, the electronic display unit **101** displays the information received from the personalized display system **109** on the display interface **106.** As an example, the display interface **106** may be one of a Cathode Ray Tube (CRT) based display, a Liquid Crystal Display (LCD), a Light Emitting Diode (LED) display or any other suitable form of display interface **106.**

In some implementations, the display interface **106** may further include an input interface, such as a touchscreen interface, a button/switch based input interface or a biometric scanner, for receiving one or more manual inputs/instructions from the user **107.** In an alternate embodiment, the biometric scanner in the display interface **106** may be used to instantly detect the identity of the user **107** when the user **107** uses the biometric scanner, thereby eliminating the requirement of extracting user characteristics from the one or more visual images **211.**

In an implementation, there may be a plurality of electronic display units **101** associated with a plurality of workplaces within the organization. Each of the plurality of electronic display units **101** may be connected and monitored using the personalized display system **109.** In an embodiment, suppose the user 'ABC' has occupied two workplaces at a given point of time. In this scenario, the personalized display system **109** would detect the presence and/or availability of the user **107** on both the workplaces based on either the presence of the user **107** himself in one of the workplace or based on the presence of one or more belongings of the user **107** in the workplaces. Now, upon detecting the availability of the user **107** on two workplaces, the personalized display system **109** may notify the user **107** to relinquish one of the workplace to avoid retention of multiple workplace and associated resources by the same user **107.**

In an implementation, as soon as the identity of the user **107** is detected and the information related to the user **107** are displayed on the electronic display unit **101,** the workplace and associated resources which are currently occupied by the user **107** are allocated to the user **107.** The allocated workplace and the associated resources would be deallocated from the user **107** only when the availability status **215** of the user **107** is determined to be 'unavailable'. Further, in scenarios where the user **107** has temporarily stepped out of the office for reasons such as appointments and meetings, the personalized display system **109** would still allocate the workplace and the associated resources to the user **107** if the one or more objects **111** associated with the user **107** are still present in the workplace. Alternatively, the personalized display system **109** may be configured to automatically deallocate the reserved workplace and the associated resources after waiting for a predetermined time. For example, the predetermined time of waiting may be 3 hours, such that, the personalized display system **109** deallocates the workplace from the user **107** if the user **107** is not present in the workplace for 3 hours, even if the one or more objects/belongings **111** of the user **107** are present in the workplace.

In some implementations, the electronic display unit **101** may be configured to display additional information about the user **107** such as, schedule of the user **107** in a day, expected time of arrival of the user **107** or any user-specific messages on the display interface **106.** Displaying the aforesaid additional information at the regular workplace of the user **107** may help other users in the organization to realize the availability of the user **107** and availability of the user's workplace, thereby efficiently managing the resources within the organization.

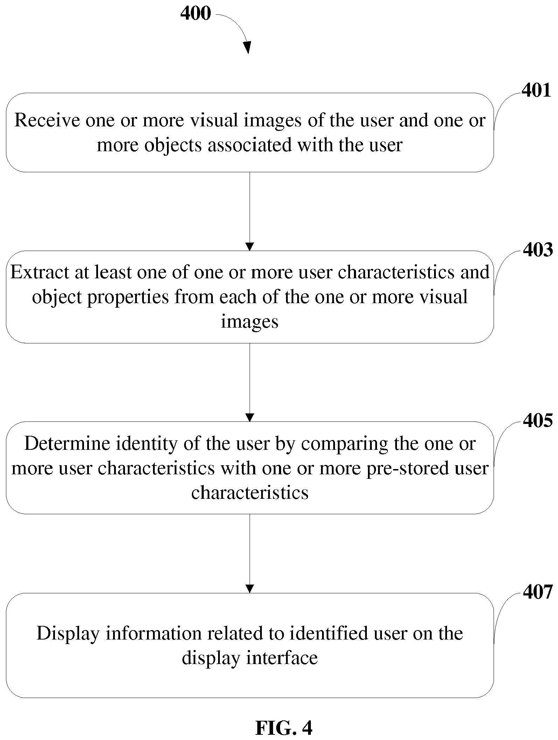

**FIG. 4** shows a flowchart illustrating a method of dynamically displaying user information in accordance with some embodiments of the present disclosure.

As illustrated in **FIG. 4****,** the method **400** includes one or more blocks for performing the method of dynamically displaying the user information using a personalized display system **109.** The method **400** may be described in the general context of computer executable instructions. Generally, computer executable instructions can include routines, programs, objects, components, data structures, procedures, modules, and functions, which perform specific functions or implement abstract data types.

The order in which the method **400** is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At **block 401,** the method **400** includes receiving, by the personalized display system **109,** one or more visual images **211** of the user **107** and one or more objects **111** associated with the user **107.** The one or more visual images **211** may be captured by one or more image capturing devices **103** associated with an electronic display unit **101.** As an example, the one or more image capturing devices **103** may capture one or more visual images **211** at periodic intervals. In an embodiment, the electronic display unit **101** may be associated with the personalized display system **109.**

At **block 403,** the method **400** includes extracting, by the personalized display system **109,** at least one of one or more user characteristics and object properties from each of the one or more visual images **211.** As an example, the one or more user characteristics may include facial characteristics of the user **107.**

At **block 405,** the method **400** includes determining, by the personalized display system **109,** identity of the user **107** by comparing the one or more user characteristics with one or more pre-stored user characteristics **213.** As an example, the one or more pre-stored user characteristics **213** may be retrieved from a user characteristics database associated with the personalized display system **109** or from the LDAP or the ERP system of the organization.

At **block 407,** the method **400** includes displaying, by the personalized display system **109,** information related to the user **107** on a display interface **106** configured in the electronic display unit **101.** In an embodiment, the information related to the identified user **107** may be continuously displayed on the display interface **106** based on availability status **215** of the user **107.** The availability status **215** may be determined by checking if the user **107** is present in the field of view **104** of the one or more image capturing devices **103.** Alternatively, the availability status **215** may be determined by comparing the object properties with pre-stored object properties or by verifying attendance status of the user **107** from a real-time attendance monitoring system. In an embodiment, the information displayed on the display interface **106** may include at least one of name of the user **107,** designation of the user **107,** contact details of the user **107** and availability status **215** of the user **107.**

### Computer System

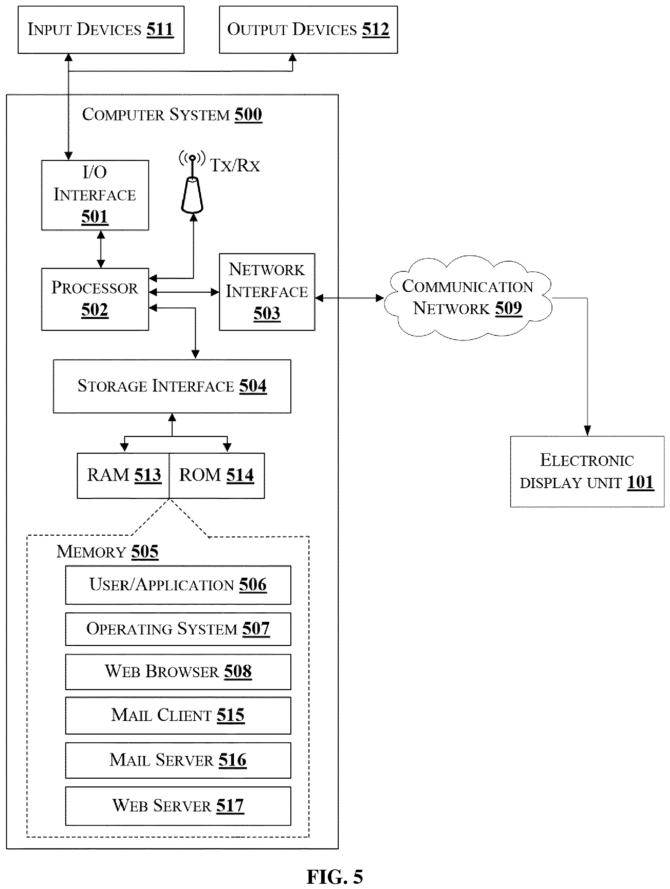

**FIG. 5** illustrates a block diagram of an exemplary computer system **500** for implementing embodiments consistent with the present disclosure. In an embodiment, the computer system **500** may be the personalized display system **109** which may be used for dynamically displaying the user information. The computer system **500** may include a central processing unit ("CPU" or "processor") **502.** The processor **502** may include at least one data processor for executing program components for executing user- or system-generated business processes. A user may include a person, a customer, a person using a device such as those included in this invention, or such a device itself. The processor **502** may include specialized processing units such as integrated system (bus) controllers, memory management control units, floating point units, graphics processing units, digital signal processing units, etc.

The processor **502** may be disposed in communication with one or more input/output (I/O) devices **(511** and **512)** via I/O interface **501.** The I/O interface **501** may employ communication protocols/methods such as, without limitation, audio, analog, digital, stereo, IEEE-1394, serial bus, Universal Serial Bus (USB), infrared, PS/2, BNC, coaxial, component, composite, Digital Visual Interface (DVI), high-definition multimedia interface (HDMI), Radio Frequency (RF) antennas, S-Video, Video Graphics Array (VGA), IEEE 802.n /b/g/n/x, Bluetooth, cellular (e.g., Code-Division Multiple Access (CDMA), High-Speed Packet Access (HSPA+), Global System For Mobile Communications (GSM), Long-Term Evolution (LTE) or the like), etc.

Using the I/O interface **501,** the computer system **500** may communicate with one or more I/O devices **(511** and **512).** In some embodiments, the processor **502** may be disposed in communication with a communication network **509** via a network interface **503.** The network interface **503** may communicate with the communication network **509.** The network interface **503** may employ connection protocols including, without limitation, direct connect, Ethernet (e.g., twisted pair 10/100/1000 Base T), Transmission Control Protocol/Internet Protocol (TCP/IP), token ring, IEEE 802.11a/b/g/n/x, etc.

Using the network interface **503** and the communication network **509,** the computer system **500** may communicate with the electronic display unit **101** for receiving one or more visual images **211** captured by one or more image capturing devices **103** in the electronic display unit **101** and to transmit the user information to the electronic display unit **101.** The communication network **509** can be implemented as one of the different types of networks, such as intranet or Local Area Network (LAN) and such within the organization. The communication network **509** may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the communication network **509** may include a variety of network devices, including routers, bridges, servers, computing devices, storage devices, etc.

In some embodiments, the processor **502** may be disposed in communication with a memory **505** (e.g., RAM **513,** ROM **514,** etc. as shown in **FIG. 5**) via a storage interface **504.** The storage interface **504** may connect to memory **505** including, without limitation, memory drives, removable disc drives, etc., employing connection protocols such as Serial Advanced Technology Attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory **505** may store a collection of program or database components, including, without limitation, user/application data **506,** an operating system **507,** web server **508** etc. In some embodiments, computer system **500** may store user/application data **506,** such as the data, variables, records, etc. as described in this invention. Such databases may be implemented as fault-tolerant, relational, scalable, secure databases such as Oracle or Sybase.

The operating system **507** may facilitate resource management and operation of the computer system **500.** Examples of operating systems include, without limitation, Apple Macintosh OS X, UNIX, Unix-like system distributions (e.g., Berkeley Software Distribution (BSD), FreeBSD, Net BSD, Open BSD, etc.), Linux distributions (e.g., Red Hat, Ubuntu, K-Ubuntu, etc.), International Business Machines (IBM) OS/2, Microsoft Windows (XP, Vista/7/8, etc.), Apple iOS, Google Android, Blackberry Operating System (OS), or the like. A user interface may facilitate display, execution, interaction, manipulation, or operation of program components through textual or graphical facilities. For example, user interfaces may provide computer interaction interface elements on a display system operatively connected to the computer system **500,** such as cursors, icons, check boxes, menus, windows, widgets, etc. Graphical User Interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, JavaScript, AJAX, HTML, Adobe Flash, etc.), or the like.

In some embodiments, the computer system **500** may implement a web browser **508** stored program component. The web browser may be a hypertext viewing application, such as Microsoft Internet Explorer, Google Chrome, Mozilla Firefox, Apple Safari, etc. Secure web browsing may be provided using Secure Hypertext Transport Protocol (HTTPS) secure sockets layer (SSL), Transport Layer Security (TLS), etc. Web browsers may utilize facilities such as AJAX, DHTML, Adobe Flash, JavaScript, Java, Application Programming Interfaces (APIs), etc. In some embodiments, the computer system **500** may implement a mail server stored program component. The mail server may be an Internet mail server such as Microsoft Exchange, or the like. The mail server may utilize facilities such as Active Server Pages (ASP), ActiveX, American National Standards Institute (ANSI) C++/C#, Microsoft .NET, CGI scripts, Java, JavaScript, PERL, PHP, Python, WebObjects, etc. The mail server may utilize communication protocols such as Internet Message Access Protocol (IMAP), Messaging Application Programming Interface (MAPI), Microsoft Exchange, Post Office Protocol (POP), Simple Mail Transfer Protocol (SMTP), or the like. In some embodiments, the computer system **500** may implement a mail client stored program component. The mail client may be a mail viewing application, such as Apple Mail, Microsoft Entourage, Microsoft Outlook, Mozilla Thunderbird, etc.

Furthermore, one or more computer-readable storage media may be utilized in implementing embodiments consistent with the present invention. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., non-transitory. Examples include Random Access Memory (RAM), Read-Only Memory (ROM), volatile memory, nonvolatile memory, hard drives, Compact Disc (CD) ROMs, Digital Video Disc (DVDs), flash drives, disks, and any other known physical storage media.

Advantages of embodiments of the present disclosure are illustrated in the following paragraphs.

In an embodiment, the method of present disclosure dynamically displays information related to the user on an electronic display unit upon identifying the user.

In an embodiment, the present disclosure provides a method for dynamically allocating the workplace to the user upon identifying the presence of user in the workplace.

In an embodiment, the method of present disclosure can dynamically determine presence of the user in the workplace by detecting, recognizing, and tracking one or more belongings of the user.

In an embodiment, the method of present disclosure may dynamically deallocate the workplace allocated to the user upon determining that the user is not present and/or not available in the workplace, thereby enhancing resource management within an organization.

In an embodiment, the method of present disclosure may be enabled to fetch data from an attendance monitoring system, user calendar or other resources to dynamically allocate or deallocate the workplace to the user based on user's availability at the workplace.

In an embodiment, the present disclosure discloses a method for automatically customizing environmental conditions/parameters associated with the workplace as per environmental preference of the user.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise.

The terms "a", "an" and "the" mean "one or more", unless expressly specified otherwise. A description of an embodiment with several components in communication with each other does not imply that all such components are required. On the contrary, a variety of optional components are described to illustrate the wide variety of possible embodiments of the invention.

When a single device or article is described herein, it will be clear that more than one device/article (whether they cooperate) may be used in place of a single device/article. Similarly, where more than one device or article is described herein (whether they cooperate), it will be clear that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method of dynamically displaying user information, the method comprising:
receiving, by a personalized display system (109), one or more visual images (211) of the user (107), wherein the one or more visual images (211) are captured by one or more image capturing devices (103) associated with an electronic display unit (101), wherein the electronic display unit (101) is associated with the personalized display system (109);
extracting, by the personalized display system (109), one or more user characteristics from each of the one or more visual images (211);
determining, by the personalized display system (109), the identity of the user (107) by comparing the one or more user characteristics with one or more pre-stored user characteristics (213); and
displaying, by the personalized display system (109), information related to the identified user (107) on the display interface (106).

2. The method as claimed in claim 1, further comprising:
receiving one or more visual images (211) of one or more objects (111) associated with the user (107); and
extracting one or more object properties from each of the one or more visual images (211) of the one or more objects (111) associated with the user (107);

3. The method as claimed in claim 1 or claim 2, wherein the information related to the identified user (107) is continuously displayed on the display interface (106) based on an availability status (215) of the user (107).

4. The method as claimed in claim 3, wherein the availability status (215) of the user (107) is determined by performing at least one of:
checking if the user (107) is in the field of view (104) of one or more image capturing devices (103); and
verifying attendance status of the user (107) from a real-time attendance monitoring system.

5. The method as claimed in claim 3 or claim 4, as dependent upon claim 2, wherein the availability status (215) of the user (107) is determined by comparing, by the personalized display system (109), the object properties with pre-stored object properties.

6. The method as claimed in any of the preceding claims, wherein the one or more visual images (211) are captured at periodic intervals.

7. The method as claimed in any of the preceding claims, wherein the one or more user characteristics comprise facial characteristics of the user (107).

8. The method as claimed in any of the preceding claims, wherein the information displayed on the display interface (106) comprises at least one of a name of the user (107), a designation of the user (107), contact details of the user (107) and an availability status (215) of the user (107).

9. The method as claimed in any of the preceding claims, further comprising modifying one or more environmental properties based on environmental preferences of the user (107).

10. A personalized display system (109) for dynamically displaying user information, the personalized display system (109) comprising:
an electronic display unit (101) comprising a display interface (106) and associated with one or more image capturing devices (103) to capture one or more visual images (211);
a processor (203) associated with the electronic display unit (101); and
a memory (205) communicatively coupled to the processor (203), wherein the memory (205) stores processor-executable instructions, which, on execution, cause the processor (203) to perform the method of any of the preceding claims.

11. A processor-readable medium comprising processor-executable instructions, which, on execution, cause a processor (203) to perform the method of any of claims 1 to 9.
